# EUROPEAN PATENT APPLICATION

(11) **EP 4 524 165 A1**
(43) Date of publication of application: **19.03.2025**
(21) Application number: 24200797.9
(22) Date of filing: 17.09.2024
(51) Int. Cl.: C08F 10/06, C08F 4/646, C08F 4/654

(54) **SOLID CATALYST FOR POLYPROPYLENE PRODUCTION AND METHOD FOR PRODUCTION OF BLOCK COPOLYMER**

(30) Priority: 18.09.2023 KR 20230124176
(71) Applicant: Hanwha TotalEnergies Petrochemical Co., Ltd., Seosan-si, Chungcheongnam-do (KR)
(72) Inventor: JEON, Yong Jun, Seosan-si (KR); LEE, Dong Geun, Seosan-si (KR); LEE, Young Joo, Seosan-si (KR); PARK, Jung Soo, Seosan-si (KR)
(74) Representative: Brevalex

(57) **Abstract**

Disclosed are a solid catalyst for producing polypropylene and a method for producing a block copolymer. Particularly, disclosed are a solid catalyst for producing polypropylene, which has high activity and excellent hydrogenation activity and is capable of producing a block copolymer having high stereoregularity and a high rubber content by copolymerization of alpha-olefins, and a method for producing a block copolymer.

## Description

### BACKGROUND

### 1. Technical Field

The present disclosure is a solid catalyst for producing polypropylene and a method for producing a block copolymer, and particularly, to a solid catalyst for producing polypropylene, which has high activity and excellent hydrogenation activity and is capable of producing a block copolymer having high stereoregularity and a high rubber content by copolymerization of alpha-olefins, and a method for producing a block copolymer.

### 2. Related Art

The content described below merely provides background information related to the present disclosure and does not constitute the prior art.

Polypropylene is a very useful material for real life or commercial applications, and is especially widely used not only in household items such as food containers, but also in automobiles and electronic products. To improve the performance of polypropylene for use in various products, it is important to improve the rigidity of polypropylene by increasing the crystallinity thereof.

Meanwhile, the impact strength required for automobile interior and exterior materials may be met by producing block copolymers with a high propylene rubber content, and for this purpose, the role of a polymerization catalyst is urgently required. This means that the polymer produced by the polymerization reaction using the catalyst should have high rigidity as a consequence of its high stereoregularity and, and should also have high copolymerizability with alpha-olefins in order to satisfy impact strength, processability, etc. For this purpose, it is necessary to appropriately select a carrier, an internal electron donor, and an external electron donor, which constitute a Ziegler-Natta propylene polymerization (PP) catalyst system. Most dramatic changes strongly tend to be determined by the carrier and internal electron donor that constitute the Ziegler-Natta PP catalyst system, but the external electron donor is also an important factor that supports the propylene polymerization (PP) reaction. Thus, depending on which external electron donor is used, not only the activity of the catalyst but also the copolymerization of alpha-olefins may be adjusted even if the same carrier and internal donor are used.

The external electron donor serves to improve the stereoregularity of the resulting polymer product by selectively poisoning or converting irregular active sites present on the surface of the solid catalyst. Depending on the molecular structure of the external electron donor used, not only the stereoregularity and molecular weight distribution of the resulting propylene polymer but also the activity of the catalyst vary. In addition, in a propylene copolymer with a comonomer, the content of the comonomer in the copolymer affects the physical properties of the copolymer.

Korean Patent No. KR1639497B1 proposes a method for improving the randomness of polymer chains in a random copolymer of propylene and a comonomer. Korean Patent No. KR1764561B1 discloses a method for allowing a propyleneethylene copolymer to exhibit high transparency and low melting temperature. However, the above patents do not show block copolymers with a high rubber content, and thus it is necessary to provide an improved method for producing a block copolymer with a high rubber content.

### [Prior Art Documents]

1. KR1639497B1
2. KR1764561B1

### SUMMARY

The present disclosure has been made in order to solve the above-described problems occurring in the prior art, and an object of the present disclosure is to provide a catalyst system, which does not adversely affect catalytic activity, has high propylene polymerization activity, and is capable of increasing the rubber content, and a method for producing a block copolymer.

The present disclosure provides a method of producing a propylene polymer or a propylene-based copolymer using a catalyst system, wherein the catalyst system includes:
(A) as a main catalyst component, a Ziegler-based catalyst including magnesium, titanium, halogen and an internal electron donor;
(B) as a co-catalyst, an alkylaluminum compound; and
(C) as external electron donors, (a) at least one tetraalkoxysilane-based compound, and (b) at least one dialkoxysilane-based compound or at least one trialkoxysilane-based compound.

Specifically, the tetraalkoxysilane-based compound may be an alkoxysilane-based compound represented by Formula 1 below, the trialkoxysilane-based compound may be a compound represented by Formula 2 below, and the dialkoxysilane-based compound may be a compound represented by Formula 3 below:

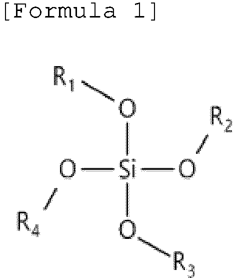

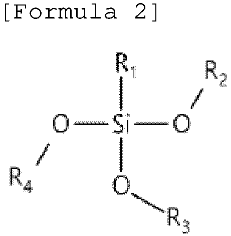

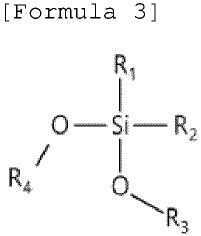

In Formulas 1 to 3 above, R₁, R₂, R₃, and R₄ are each independently an alkyl group having 1 to 12 carbon atoms, an allyl group having 6 to 20 carbon atoms, or a cycloalkyl group having 3 to 20 carbon atoms, provided that R₁, R₂, R₃ and R₄ are not all identical to one another.

More specifically, the dialkoxysilane-based compound represented by Formula 3 may be dicyclopentyldimethoxysilane (DCPDMS).

Preferably, as the external electron donors (C), the at least one tetraalkoxysilane-based compound (a) and the at least one dialkoxysilane-based compound or at least one trialkoxysilane-based compound (b) are mixed together at a molar ratio of 1:0.1 to 20. In this case, the catalyst system may exhibit higher hydrogenation activity, and a block copolymer with better stereoregularity and a higher rubber content may be produced by copolymerization of alpha-olefins using the catalyst system.

Specifically, the main catalyst component may include 5 to 40 wt% of magnesium, 0.5 to 10 wt% of titanium, 50 to 85 wt% of halogen, and 0.5 to 30 wt% of the internal electron donor.

Specifically, the internal electron donor may be one or more selected from the group consisting of Formulas 4 to 12 below:

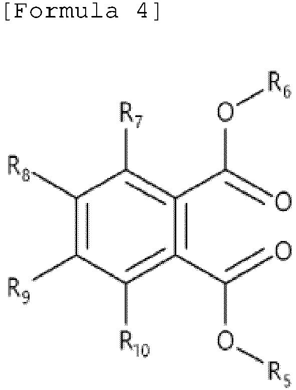

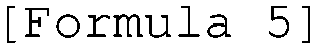

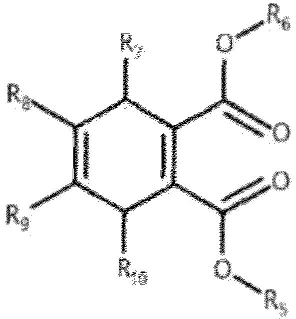

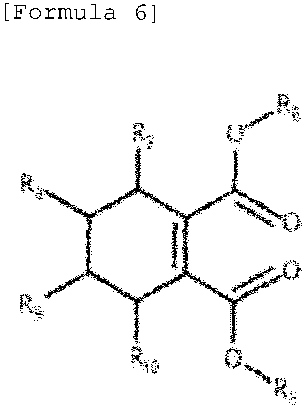

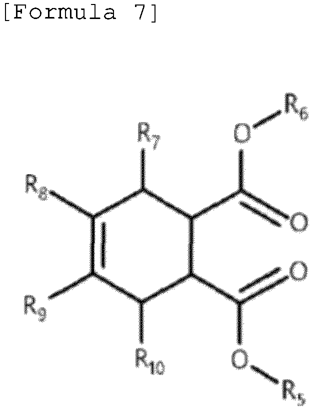

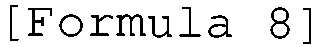

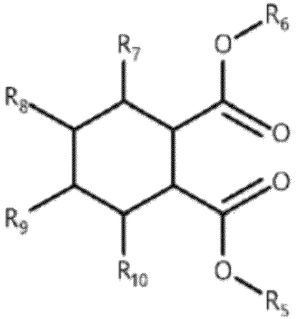

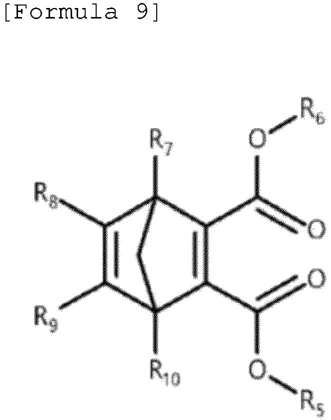

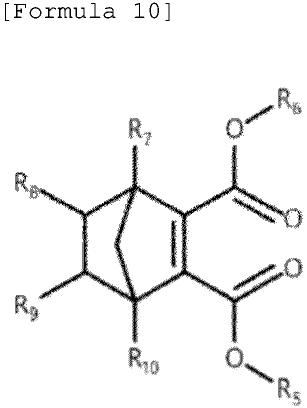

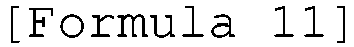

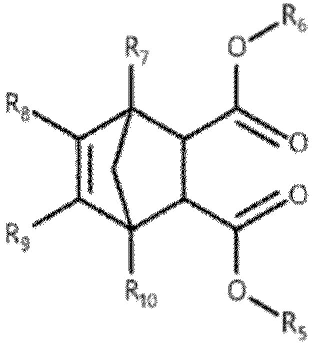

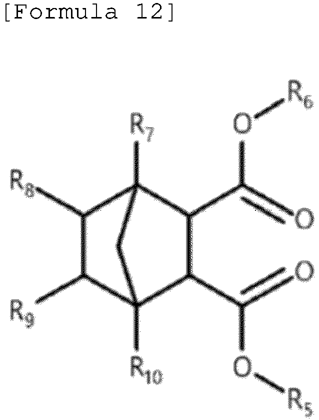

In Formulas 4 to 12 above, R₅, R₆, R₇, R₈, R₉, and R₁₀ are each independently an alkyl group having 1 to 15 carbon atoms, an allyl group having 1 to 15 carbon atoms, or a cycloalkyl group having 1 to 15 carbon atoms.

Specifically, the co-catalyst may be an alkylaluminum compound represented by Formula 13 below:

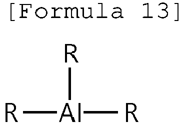

In Formula 13 above, R is an alkyl group having 1 to 7 carbon atoms.

Preferably, the molar ratio of aluminum atoms in the co-catalyst to titanium atoms in the main catalyst component may be in the range of 1 to 1,000. In this case, a block copolymer with a higher rubber content may be produced by copolymerization of alpha-olefins using the catalyst system.

Preferably, the molar ratio of silicon atoms in the external electron donor to titanium atoms in the main catalyst component may be in the range of 0.1 to 500. In this case, a block copolymer with a higher rubber content may be produced by copolymerization of alpha-olefins using the catalyst system.

In addition, embodiments of the present disclosure may provide a propylene polymer or copolymer produced by the above-described production method.

The present disclosure may also provide a catalyst system for producing a propylene polymer or a propylene-based copolymer, including:
(A) as a main catalyst component, a Ziegler-based catalyst including magnesium, titanium, halogen and an internal electron donor;
(B) as a co-catalyst, an alkylaluminum compound; and
(C) as external electron donors, (a) at least one tetraalkoxysilane-based compound, and (b) at least one dialkoxysilane-based compound or at least one trialkoxysilane-based compound.

Embodiments of the present disclosure may provide the catalyst system wherein the tetraalkoxysilane-based compound is an alkoxysilane-based compound represented by Formula 1 below, the trialkoxysilane-based compound is a compound represented by Formula 2 below, and the dialkoxysilane-based compound is a compound represented by Formula 3 below:

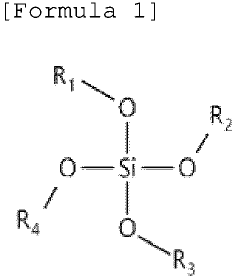

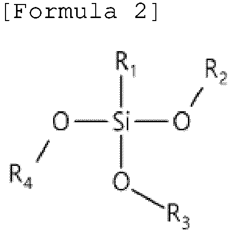

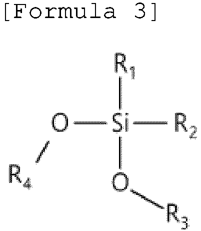

In Formulas 1 to 3 above, R₁, R₂, R₃, and R₄ are as defined above with respect to the method for producing a propylene polymer or a propylene-based copolymer.

Embodiments of the present disclosure may provide the catalyst system wherein, as the external electron donors (C), the at least one tetraalkoxysilane-based compound (a) and the at least one dialkoxysilane-based compound or at least one trialkoxysilane-based compound (b) are mixed together at a molar ratio of 1:0.1 to 20.

According to the present disclosure, it is possible not only to produce polypropylene having excellent stereoregularity using the catalyst system having excellent hydrogenation activity, but also to produce a block copolymer with a high rubber content by copolymerization of alpha-olefins using the catalyst system.

### BRIEF DESCRIPTION OF THE DRAWINGS

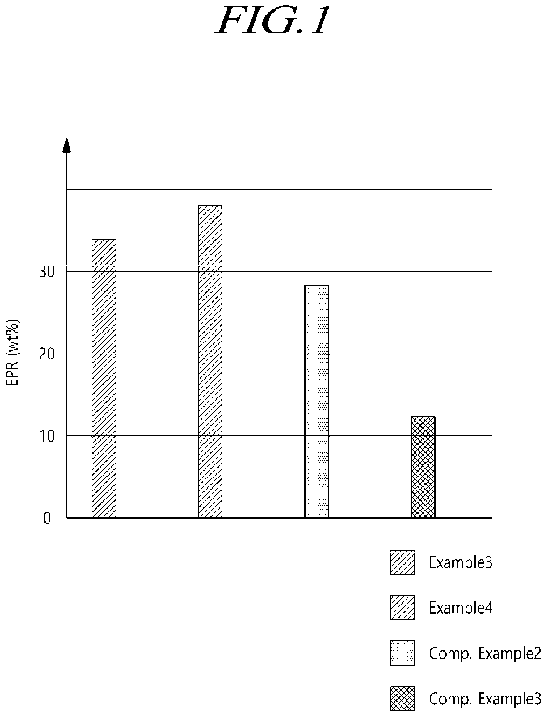

FIG. 1 is a graph showing the ethylene-propylene rubber (EPR) contents according to Example 3, Example 4, Comparative Example 2, and Comparative Example 3 shown in Table 2 below.

### DETAILED DESCRIPTION

The present disclosure will be described in detail below by way of examples and comparative examples, but the present disclosure is not limited thereto.

### [Example 1]

### [Production of Main Catalyst Component]

In a 1-liter glass reactor sufficiently substituted with nitrogen and equipped with a stirrer, 200 ml of toluene and diethoxy magnesium (25 g, 0.219 mol) were introduced and stirred at 250 rpm while maintaining a temperature of 10°C. 75 ml of titanium tetrachloride was added thereto over 30 minutes, and then the temperature of the reactor was increased to 110°C at a rate of 0.5°C per minute. During the temperature increase process, when the temperature reached 25°C, 7.5 ml (0.028 mol) of diisobutyl phthalate (DIBP) was added. The resulting product was allowed to react at 110°C for 1 hour, and then the stirring was stopped and the solid product was allowed to precipitate. Then, the supernatant was removed, and the remaining solid product was washed with 250 ml of fresh toluene for 15 minutes and then further washed.

Specifically, the solid product obtained as described above was washed once with 250 ml of fresh toluene at 100°C, and then further washed six more times with 250 ml of n-hexane each time at 40°C to obtain a main catalyst component as a light yellow solid. The solid main catalyst component was dried under flowing nitrogen for 8 hours, and the titanium content in the obtained solid main catalyst component was 2.9 wt%.

### [Propylene Homopolymerization]

In a 4-liter stainless steel high-pressure reactor, 10 mg of a catalyst, 6.6 mmol of triethylaluminum, 0.33 mmol of dicyclopentyldimethoxysilane (DCPDMS), and 0.33 mmol of tert-butoxy-triethoxy silane (TBTES) as a tetraalkoxysilane-based compound represented by Formula 1 were introduced. Subsequently, 1,000 ml of hydrogen and 2.4 L of liquefied propylene were sequentially injected, and polymerization was performed at low temperature for 10 minutes and then performed at a temperature of 70°C for 2 hours. Thereafter, the reactor temperature was lowered to room temperature, the discharge pipe was opened to lower the pressure inside the reactor, and then the reactor was opened to recover the polymerized propylene polymer.

Catalytic activity and stereoregularity were analyzed by the following methods.
1. Catalytic activity (kg PP/g catalyst) = the amount of propylene polymer produced (g) / the amount of catalyst introduced (mg).
2. Stereoregularity (X.S.) = wt% of components dissolved in xylene relative to 100 g of the polymer.
3. Bulk density (B.D.) = the weight per volume of the polymer, measured using 100 ml of the polymer in the uncompressed state.
4. Melt flow index (M.F.I.) = measured using a 2.16-kg weight at 230°C according to ASTM D1238.
5. Melting temperature (Tₘ) = measured using differential scanning calorimetry (DSC).

**[Table 1]**

| Propylene homopolymer | Comparative Example 1 | Example 1 | Example 2 |
|---|---|---|---|
| Activity (kg PP/g catalyst) | 70 | 69 | 70 |
| B.D. (g/ml) | 0.43 | 0.43 | 0.43 |
| M.I. (g/10 min@2.16 kg) | 1.5 | 1.5 | 1.7 |
| Tₘ (°C) | 163.4 | 162.8 | 162.8 |
| X.S. (wt%) | 1.2 | 1.4 | 1.4 |
| Mixing ratio (DCPDMS:TBTES) | 1:0 | 1:1 | 1:2 |

### [Comparative Example 1]

A polymerization experiment was performed in the same manner as Example 1, except that only 0.66 mmol of dicyclopentyldimethoxysilane (DCPDMS) was used as an external electron donor. Measurement and analysis were performed using the measurement and analysis methods described above with respect to propylene homopolymerization, and the results are shown in Table 1 above.

### [Example 2]

According to the propylene homopolymerization described in Example 1, a polymerization experiment was performed using dicyclopentyldimethoxysilane (DCPDMS) and tert-butoxy-triethoxy silane (TBTES) as external electron donors. Measurement and analysis were performed using the measurement and analysis methods described above with respect to propylene homopolymerization, and the results are shown in Table 1 above.

Referring to Table 1 above, as a result of comparing Comparative Example 1 and Examples 1 to 2 in Table 1, it can be seen that Examples 1 and 2 maintained the properties (including catalytic activity) shown in Comparative Example 1, indicating that the change in the production method did not affect the properties of the propylene homopolymer (or matrix).

### [Propylene Block Copolymerization]

In a 2.0-liter stainless steel reactor substituted with nitrogen and equipped with a stirrer, 5 mg of any solid catalyst was placed, 6.6 mM triethylaluminum and 0.66 mM external electron donor were introduced, and then 1.2 L of liquefied propylene and 5,000 ml of hydrogen were introduced. Thereafter, prepolymerization was performed at 20°C for 5 minutes, followed by propylene homopolymerization at 70°C for 40 minutes. After completion of homopolymerization, the temperature of the reactor was lowered to room temperature, the unreacted monomer was removed, and then ethylene was added so that the molar ratio of ethylene to propylene was 2:3. Next, the temperature was increased to 70°C and additional polymerization was performed at that temperature for 60 minutes, thereby producing a propylene-based block copolymer.

Catalytic activity and EPR were analyzed by the following methods.
1. Catalytic activity (kg PP/g catalyst) = the amount of propylene polymer produced (g) / the amount of catalyst introduced (mg).
2. Ethylene-propylene rubber (EPR) content = wt% of components dissolved in xylene relative to 100 g of the polymer (ethylene content (wt) / polymer mass (wt) × 100).
3. Ethylene content in the copolymer (B-C2) = ethylene content measured by analyzing the copolymer using FT-IR (infrared spectroscopy).
4. Bulk density (B.D.) = the weight per volume of the polymer, measured using 100 ml of the polymer in the uncompressed state.
5. Melting temperature (Tₘ) = measured using differential scanning calorimetry (DSC).

**[Table 2]**

| Propylene block copolymer | Example 3 | Example 4 | Comparative Example 2 | Comparative Example 3 |
|---|---|---|---|---|
| Activity (kg PP/g cat.) | 73.37 | 67.41 | 60.89 | 11.65 |
| B.D. (g/ml) | 0.4482 | 0.4503 | 0.4482 | 0.4314 |
| Tₘ (°C) | 163.4 | 163.2 | 163.4 | 161.0 |
| EPR (wt%) | 33.9 | 38.0 | 28.4 | 12.2 |
| B-C2 | 16.43 | 20.17 | 19.85 | 13.07 |
| Mixing ratio (DCPDMS:TBTES) | 2:1 | 1:1 | 1:0 | - |
| Mixing ratio (DCPDMS:TEOS) | - | - | - | 1:1 |

### [Comparative Example 2]

According to the propylene block copolymerization described above, a polymerization experiment was performed using only dicyclopentyldimethoxysilane (DCPDMS) as an external electron donor. Measurement and analysis were performed using the measurement and analysis methods described above with respect to propylene homopolymerization, and the results are shown in Table 2 above.

### [Comparative Example 3]

According to the propylene block copolymerization described above, a polymerization experiment was performed using dicyclopentyldimethoxysilane (DCPDMS) and tetraethyl orthosilicate (TEOS) as external electron donors. Measurement and analysis were performed using the measurement and analysis methods described above with respect to propylene homopolymerization, and the results are shown in Table 2 above.

### [Examples 3 and 4]

According to the propylene block copolymerization described above, a polymerization experiment was performed using dicyclopentyldimethoxysilane (DCPDMS) and tert-butoxy-triethoxy silane (TBTES) as external electron donors. In Examples 3 and 4, DCPDMS and TBTES were mixed together at different ratios. Measurement and analysis were performed using the measurement and analysis methods described above with respect to propylene homopolymerization, and the results are shown in Table 2 above. Referring to Table 2 above, it can be seen that Examples 3 and 4 exhibited better catalytic activity than Comparative Examples 2 and 3. This result means that external electron donors that do not have C3 and S4 symmetries should be selected. That is, when perfect symmetry is broken, the coupling pattern between the external electron donors and the carrier may become various, and the electron density can be increased by introducing quaternary butoxide, such as TBTES. This increased electron density and various coupling patterns are considered to enable stronger electron donation, which results in increased catalyst activity. However, the results of this phenomenon may vary depending on the characteristics of external electron donors mixed with the internal electron donor.

Also, regarding EPR, referring to Table 2 above, it can be seen that Examples 3 and 4 exhibited better EPR than Comparative Examples 2 and 3. This means that, in the case of Examples 3 and 4, the propylene-based block copolymer has a higher ethylene content and thus an increased rubber content.

Meanwhile, FIG. 1 is a graph comparing the rubber content between Examples 3 and 4 of the present disclosure and Comparative Examples 2 and 3.

Referring to Figure 1, it can be seen that the rubber (EPR) contents of Examples 3 and 4 are higher than that of Comparative Example 2. These results suggest that the rubber content of Example 4 is higher than those of Comparative Examples 2 and 3.

The above description is intended merely to illustrate the present disclosure, and those skilled in the art will appreciate that various modifications are possible without departing from the essential characteristics of the present disclosure. Accordingly, the embodiments disclosed in the present specification are for illustrative purposes, rather than limiting the present disclosure, and the spirit and scope of the present disclosure are not limited by these embodiments. The scope of protection of the present disclosure should be defined by the appended claims, and all technologies equivalent thereto should be interpreted as being included in the scope of rights of the present disclosure.

## Claims

1. A method of producing a propylene polymer or a propylene-based copolymer using a catalyst system, wherein the catalyst system comprises:
(A) as a main catalyst component, a Ziegler-based catalyst comprising magnesium, titanium, halogen and an internal electron donor;
(B) as a co-catalyst, an alkylaluminum compound; and
(C) as external electron donors, (a) at least one tetraalkoxysilane-based compound, and (b) at least one dialkoxysilane-based compound or at least one trialkoxysilane-based compound.

2. The method of claim 1, wherein the tetraalkoxysilane-based compound is an alkoxysilane-based compound represented by Formula 1 below, the trialkoxysilane-based compound is a compound represented by Formula 2 below, and the dialkoxysilane-based compound is a compound represented by Formula 3 below: 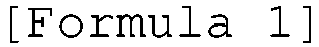 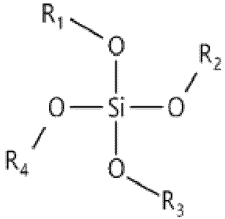 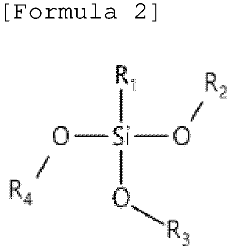 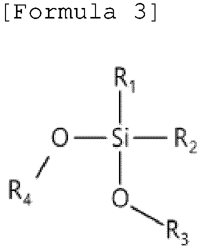 wherein R₁, R₂, R₃, and R₄ are each independently an alkyl group having 1 to 12 carbon atoms, an allyl group having 6 to 20 carbon atoms, or a cycloalkyl group having 3 to 20 carbon atoms, provided that R₁, R₂, R₃ and R₄ are not all identical to one another.

3. The method of claim 1 or 2, wherein, as the external electron donors (C), the at least one tetraalkoxysilane-based compound (a) and the at least one dialkoxysilane-based compound or at least one trialkoxysilane-based compound (b) are mixed together at a molar ratio of 1:0.1 to 20.

4. The method of any one of claims 1 to 3, wherein the main catalyst component comprises 5 to 40 wt% of magnesium, 0.5 to 10 wt% of titanium, 50 to 85 wt% of halogen, and 0.5 to 30 wt% of the internal electron donor.

5. The method of any one of claims 1 to 4, wherein the internal electron donor is one or more selected from the group consisting of Formulas 4 to 12 below: 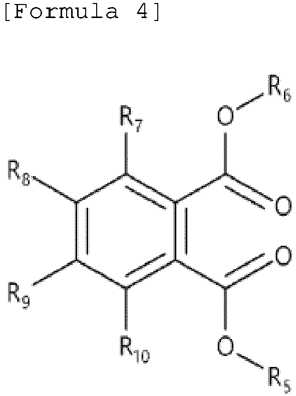 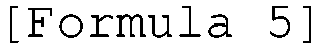 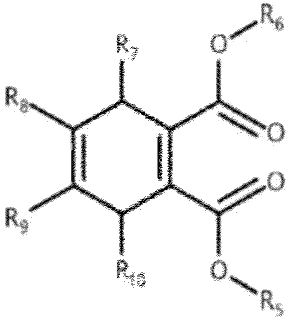 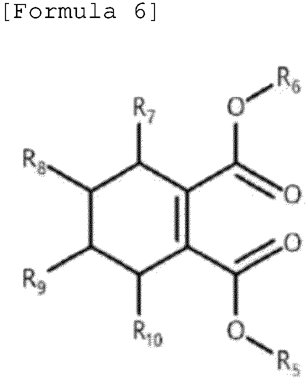 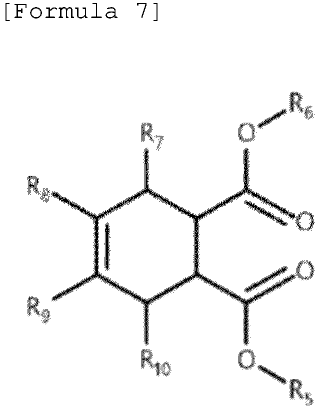 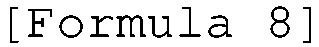 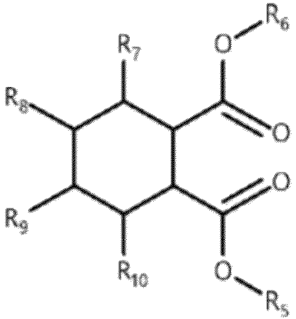 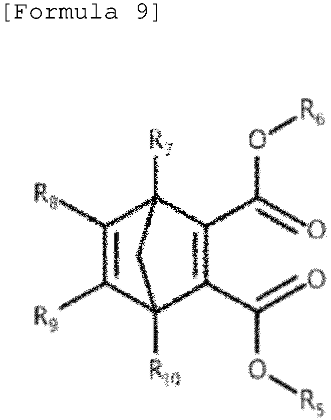 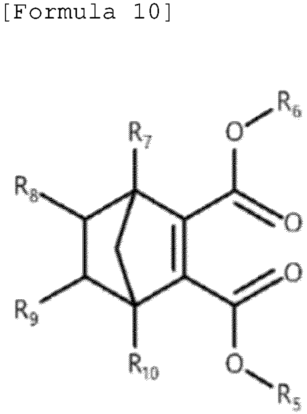 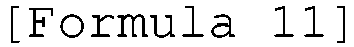 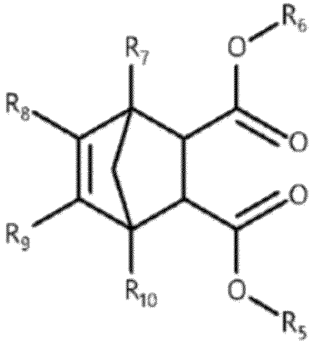 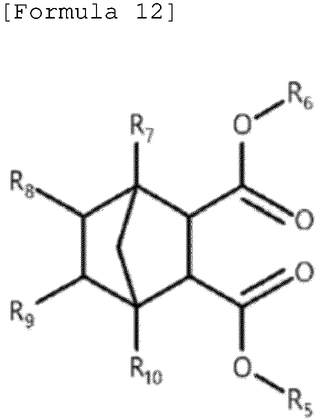 wherein R₅, R₆, R₇, R₈, R₉, and R₁₀ are each independently an alkyl group having 1 to 15 carbon atoms, an allyl group having 1 to 15 carbon atoms, or a cycloalkyl group having 1 to 15 carbon atoms.

6. The method of any one of claims 1 to 5, wherein the co-catalyst is an alkylaluminum compound represented by Formula 13 below: 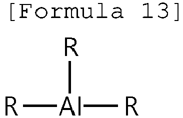 wherein R is an alkyl group having 1 to 7 carbon atoms.

7. The method of any one of claims 1 to 6, wherein a molar ratio of aluminum atoms in the co-catalyst to titanium atoms in the main catalyst component is in the range of 1 to 1,000.

8. The method of any one of claims 1 to 7, wherein a total molar ratio of silicon atoms in the external electron donors to titanium atoms in the main catalyst component is in the range of 0.1 to 500.

9. A propylene polymer or copolymer produced by the method set forth in any one of claims 1 to 8.

10. A catalyst system for producing a propylene polymer or a propylene-based copolymer, comprising:
(A) as a main catalyst component, a Ziegler-based catalyst comprising magnesium, titanium, halogen and an internal electron donor;
(B) as a co-catalyst, an alkylaluminum compound; and
(C) as external electron donors, (a) at least one tetraalkoxysilane-based compound, and (b) at least one dialkoxysilane-based compound or at least one trialkoxysilane-based compound.

11. The catalyst system of claim 10, wherein the tetraalkoxysilane-based compound is an alkoxysilane-based compound represented by Formula 1 below, the trialkoxysilane-based compound is a compound represented by Formula 2 below, and the dialkoxysilane-based compound is a compound represented by Formula 3 below: 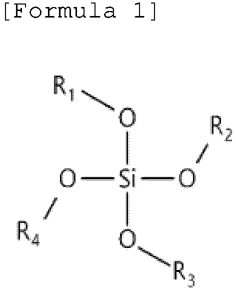 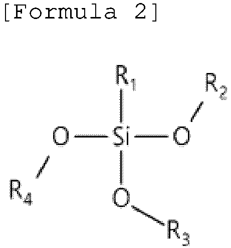 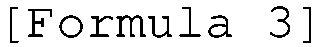 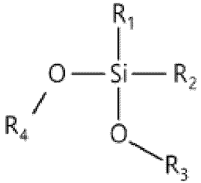 wherein R₁, R₂, R₃, and R₄ are each independently an alkyl group having 1 to 12 carbon atoms, an allyl group having 6 to 20 carbon atoms, or a cycloalkyl group having 3 to 20 carbon atoms, provided that R₁, R₂, R₃ and R₄ are not all identical to one another.

12. The catalyst system of claim 10 or 11, wherein, as the external electron donors (C), the at least one tetraalkoxysilane-based compound (a) and the at least one dialkoxysilane-based compound or at least one trialkoxysilane-based compound (b) are mixed together at a molar ratio of 1:0.1 to 20.
